# EUROPEAN PATENT SPECIFICATION

(11) **EP 4 642 252 B1**
(45) Date of publication and mention of the grant of the patent: **22.04.2026**
(21) Application number: 23841632.5
(22) Date of filing: 27.12.2023
(51) Int. Cl.: A23L 7/109, A23L 7/117, A23L 7/122

(54) **METHOD FOR MAKING A SNACK HAVING THE FORM OF THE USUAL SHAPES OF SHORT OR LONG PASTA**
VERFAHREN ZUR HERSTELLUNG EINES SNACK IN FORM VON KLASSISCHEN KURZEN ODER LANGEN TEIGWARENFORMEN
PROCEDE DE FABRICATION D'UN SNACK AYANT LA FORME CLASSIQUE D'UNE PATE ALIMENTAIRE COURTE OU LONGUE

(30) Priority: 30.12.2022 IT 202200027321
(43) Date of publication of application: 05.11.2025
(73) Proprietor: Luchinos Società A Responsabilità Limitata Semplificata, 20122 Milano (IT)
(72) Inventor: ARCOINI, Luca, 20122 Milano (IT)
(74) Representative: Grassi, Stefano
(86) International application number: PCT/IB2023/063267
(87) International publication number: WO 2024/141940

(56) References cited:
- EP-A1- 0 588 600
- EP-A2- 0 847 702
- WO-A1-2022/029483
- US-A- 5 695 804
- US-A1- 2002 146 485
- US-A1- 2007 098 865

## Description

### Field of application

It is an object of the present invention to provide a method for producing a snack having the form and composition of the usual shapes of short or long pasta.

In this context, a snack refers to a food of a small shape, which can be either salty or sweet, and which is generally eaten during an aperitif or snack, also in combination with other foods, usually with dressings and typical sauces for seasoning Italian pasta.

Usual snacks are traditional crisps and popcorn.

In the present context, the form of the usual shapes of short or long pasta relates to any form of the conventional pasta shapes for the person skilled in the art, such as the form of spaghetti, tagliatelle, bucatini, macaroni, rigatoni, penne, paccheri, ruote,
pizzoccheri, conchiglie, farfalle, orecchiette, trofie, fusilli, ravioli, tortellini, caramelle, tortiglioni, tortelloni, mezzelune, as well as pasta in the form of strips, sticks, squares, rhombuses, triangles, circles, wherein said forms of pasta have a regular outer profile or an irregular outer profile, with a smooth or ridged or rough outer surface.

In this context, durum wheat semolina refers to the product obtained by milling the durum wheat kernel and comprises both proper semolina, semolato (i.e., what remains after the semolina has been sifted) and whole-wheat semolina, as well as a mixture of these products. In this context, yeast refers to any substance which, when added to the dough, is capable of increasing the volume of the dough.

In this context, extrusion process refers to a process in which a dough is pushed through a suitably shaped die (e.g. made of bronze or Teflon) to obtain dough portions of a predefined shape; lamination process refers to a process in which a dough is pushed between one or more pairs of opposite rollers spaced apart from each other, to obtain dough portions of a uniform, desired thickness.

### Prior art

They are already known snacks having the form of the usual shapes of pasta, the known snacks, while recalling the form of the shapes of pasta, generally have a more swollen form than the original pasta shapes, and/or have an uneven outer surface, e.g. comprising bubbles.

For example, US 6 045 851 describes a method for producing a "pasta snack" that is extruded and then expanded in hot air.

US 2007/0098865 A1 discloses baked snacks having a hollow stick shape including both gelatinised and non-gelatinised flour, wherein the dough does not substantially include active gluten, by extrusion and baking.

US 5 695 804 A discloses durum wheat-based snacks having a crunchy, fracturable, chip-like texture and appearance.

EP 0 588 600 describes a method similar to US 6 045 851 wherein, however, the dough portions are fried.

The object of the present invention is to realise a method for producing a snack having the form of the usual shapes of short or long pasta, as an alternative to the known ones, and which enables the production of snacks having a well-defined shape and at the same time having a pleasant degree of crunchiness and chewability and taste.

A further object is to create a method that allows snacks to be produced in a relatively simple and quick way.

### Summary of the invention

This and other objects that will be apparent to a person skilled in the art are achieved by a method for producing a snack having the form of the usual shapes of short or long pasta, comprising the steps:
a) preparing a dough comprising:
   - durum wheat semolina in an amount between 40% and 80% by weight of the dough, preferably between 60% and 75%,
   - water in an amount between 10% and 40% by weight of the dough, preferably between 20% and 30%,
   - vegetable oils and/or animal fats, preferably extra virgin olive oil, or olive oil, or butter, or peanuts oil, or coconut oil, or palm oil, or lard, in an amount between 0.1% and 10% by weight, and more preferably between 0.1% and 7%,
   - salt in an amount between 0.1% and 10% by weight of the dough, preferably between 0.5% and 7%,
   - wherein said dough is yeast-free,
b) providing a first processing of the dough by means of an extrusion or lamination process so as to obtain portions of raw dough which have the forms of the classic shapes of fresh or dry short or long pasta,
c) wherein, after said first processing, said portions of raw dough have a thickness between 0.1 mm and 2 mm, preferably between 0.4 mm and 1.3 mm,
d) wherein in said first dough processing, the dough is kept at a temperature and for a time lower than the cooking temperature and time, preferably lower than 80°C, so that at the end of this first processing the obtained dough portions are still raw;
e) subjecting the dough portions to a second processing which provides a first step of dressing the raw extruded or laminated dough portions, wherein vegetable oil, preferably olive oil or extra virgin olive oil is added to all or part of the outer surface of said portions of raw dough, in a percentage between 1% and 30% by weight of the portion of the raw dough,
f) subjecting the dough portions to a third processing which provides a thermal cooking treatment chosen from one of the following treatments: baking in the oven or cooking on heated plates,
   - wherein said dough portions are cooked at a temperature preferably comprised between 80°C and 300°C, preferably between 120°C and 190°C, and for a duration between 1 minute and 120 minutes, preferably between 6 minutes and 40 minutes, and even more preferably between 8 minutes and 25 minutes,
   - wherein said cooking the portions of raw dough does not require ventilation or requires ventilation of less than 15m/s so as to prevent their expansion, and/or creation of bubbles on the surface,
   - wherein said cooking does not involve frying the portions of dough
g) wherein after cooking the snack:
   - has a moisture content below 8%, preferably below 6%,
   - has substantially maintained the same shape as the dough portions before cooking, has not expanded, is neither leavened nor shows surface swellings,
   - has smaller dimensions with respect to the size of the portions of dough before cooking, for example smaller percentage dimensions by a value between 2% and 30%.

It should be noted that baking in an oven or cooking on heated plates, without using air or ventilation, or with a very limited ventilation (lower than 15m/s), prevents both the expansion and the formation of bubbles on the outer surface of the snacks.

It should be noted that cooking according to the invention does not involve cooking in boiling water or subsequent frying, so as to prevent the snacks from losing the obtained form as they leave the extruder die.

It is also pointed out that the method according to the invention involves obtaining the portions of dough to be cooked by avoiding flaking the dough, i.e., by avoiding folding the dough several times, thus enriching it with air, as is for example usual in the preparation of cream crackers, savouries and bread sticks.

The forming of the portions of raw dough by means of an extruder, referred to in step b) of the method according to the invention, implicitly comprises, as is usual in the field of short or long pasta production, the operation of cutting the drawn dough, which is carried out whenever it is desired to obtain portions of raw dough having the shape of short pasta (for example by means of blades provided at the outlet ports of the extruder die).

Preferably, to improve the texture, and/or weaken the gluten bond, favour the chewability of the end-product, and/or the taste, and/or the colouring of the snack, the dough comprises one or more of the following ingredients:
- an ingredient selected from the group comprising: double zero flour, and/or zero flour, and/or whole wheat flour, and/or kamut flour, and/or buckwheat flour, and/or corn flour, and/or rice, and/or oat flour, and/or chickpea flour, and/or legume flour, and/or vegetable flour and/or pulverized vegetables, for example spinach, tomato, beetroot, carrot, and/or red lentils, and/or pea flour, and/or potato starch, and/or coconut flour, and/or a mixture of said flours or pulverized vegetables or starch, wherein said ingredient is included in the dough in a percentage between 0% and 50%, preferably between 0% and 30% by weight of the dough.
- an ingredient selected from the group comprising: cheeses, grated cheeses, dried or dehydrated or freeze-dried powdered cheeses, for example parmigiano reggiano, grana padano, pecorino, pecorino romano, gorgonzola, and/or a mixture of said ingredients, wherein said ingredient and/or mixture is included in the dough in a percentage between 0% and 7% by weight of the dough;
- an ingredient selected from the group comprising: crushed spices, and/or dried or freeze-dried powdered flavourings, for example: chilli pepper, basil, garlic, vegetables, tomatoes, dehydrated olives, capers, powdered pancetta or bacon, cocoa, coffee, and/or a mixture of said ingredients, wherein said ingredient and/or mixture is included in the dough in a percentage between 0% and 7% by weight of the dough;
- an ingredient selected from the group comprising: wine, and/or wine or apple vinegar, and/or a mixture of said ingredients, wherein said ingredient and/or mixture is included in the dough in a percentage between 0% and 5% by weight of the dough;
- an ingredient selected from the group comprising: seeds, for example sesame seeds, pumpkin seeds, cereal seeds, and/or a mixture of said ingredients, wherein said ingredient and/or mixture is included in the dough in a percentage between 0% and 5% by weight of the dough;
- an ingredient selected from the group comprising: eggs, and/or honey, and/or sugar, and/or cane sugar, and/or mint, and/or cocoa powder, and/or coffee powder, and/or a mixture of said ingredients, wherein said ingredient and/or mixture is included in the dough in a percentage between 0% and 10% by weight of the dough;
- an ingredient selected from the group comprising: alcoholic liquids for example beer, wine, cognac, rum, whisky, gin, vodka, and/or a mixture of said ingredients, wherein said ingredient and/or mixture is included in the dough in a percentage between 0% and 10% by weight of the dough;
It is pointed out that the addition of ingredients such as oil, vinegar/wine, and cheese contribute to weakening the gluten bond, de-structuring the dough, and making the snack more crumbly and crispy and easy to chew.

Preferably, to facilitate extrusion and/or lamination, the dough is a slightly damp and slightly hard dough and requires a moisture content below 35%, and preferably between 20% and 30%.

Preferably, the ingredients of the dough are poured into a bowl of a kneading machine and the ingredients are kneaded for a time between 6 minutes and 120 minutes, preferably between 8 minutes and 60 minutes, so as to obtain a dough with a consistency that is not compact but fragmented, crumbled since it is a dry and not elastic dough, which is only compacted in the following steps involving the extrusion of the dough.

For example, double-bowl kneaders provided with removable-paddle shafts can be used. The process can also involve the use of different kneading machines such as fork, spiral or planetary kneaders.

Preferably, the step of processing the dough by means of an extrusion process involves introducing the dough into an extruder adapted to push the dough through a die so as to obtain at the outlet of said extruder raw portions of dough which have the forms of the classic shapes of the short or long pasta, said extruder subjecting the dough to a pressure of at least 10 bar, preferably between 20 bar and 180 bar, and even more preferably between 40 bar and 120 bar, so as to reduce the content of air present in the extruded dough portions, wherein preferably the temperature of the extruded dough portions leaving the extruder is between 20°C and 80°C so as to avoid cooking said portions of dough during this step of the process. According to a particular aspect of the invention, the dough during the extrusion process is cooled in such a way as to prevent it from reaching temperatures, e.g. above 80°C, which could cause it to be partially cooked. For this purpose, for example, extruders provided with a cooling device (also known as a "chiller") can be used.

Depending on the die used, the appearance of the outer surface of the extruded portions of dough, and ultimately of the outer surface of the snacks, can be varied, e.g. using a bronze die results in a rougher outer surface than using Teflon dies.

It should be noted that in order to obtain the preferred thicknesses for the portions of dough leaving the extruder, it is necessary to make dedicated, specific and custom-made dies, since the dies usually used in the production of the usual shapes of short or long pasta do not allow to obtain these very thin thicknesses.

Preferably, the step of processing the dough by a laminating process involves inserting the dough into a laminating machine adapted to make the dough pass between two opposite rollers, the distance between which is gradually reduced, so as to obtain a very compact "sheet of dough" of the desired thickness.

The extruded or laminated and suitably cut portions of the dough are moved by means of usual conveyors such as conveyor belts or meshes for food use.

It should be noted that the invention also relates to shapes of stuffed pasta, such as tortellini and ravioli, for these shapes, the dough according to the invention is fed to the usual machines used for the automatic production of these shapes of stuffed pasta, for example to the usual ravioli machines.

For certain forms of dough portions, after extrusion or lamination and before the cooking step, there is an intermediate step of stabilisation of their shape which includes a preliminary heat treatment at a temperature below 120°C and over 50C, so that said dough portions have a moisture content between 12% and 23%, but are not yet subjected to a cooking process, wherein said preliminary heat treatment is preferably carried out by one of the following steps:
a) passing in a steam chamber,
b) passing through a pasteuriser, for example of the type having a heating system with integrated boiler and heat exchanger immersed in water, for example for a time between 0.10 seconds and 15 minutes and with a maximum temperature of 120°C, wherein the process must not
   include cooking of the product, hence for temperatures above 70°C the pasteurization times are very limited, for example just a few seconds for a temperature between 80°C and 120°C,
c) passing in aligned ovens with electric resistances or lamps heating, for example, at a temperature between 25° and 200° and for example for a period between 0.10 seconds and 50 minutes, wherein the process must not involve cooking the product, hence for temperatures over 70°C the period of times in the ovens are very limited, for example a few seconds for a temperature between 80°C and 200°C.

Prior to the cooking step, the method involves the step of seasoning the raw extruded or laminated dough portions, which includes adding to all or part of the outer surface of said raw dough portions and/or said cooked dough portions at least one ingredient selected from:
- usual dressings or sauces, for example tomato sauce, basil pesto, olive pesto, cheese sauces,
- egg white in an amount between 0.1% and 10% by weight of the raw dough portion,
- and/or flavourings, in an amount between 0.1% and 10% of the weight of the raw dough portion, wherein the flavourings preferably include the usual flavourings of pasta dishes e.g.: cheese and pepper, parmesan, pesto, amatriciana sauce, tomato sauce, carbonara, garlic oil and chilli, norma, saffron, ragù; arrabbiata, puttanesca, cream and ham, butter and sage and parmesan...
- and/or animal fats, for example butter or lard, in an amount between 0.1% and 25% by weight of the raw dough portion.

This seasoning step is, for example, carried out in one of the following ways:
a) dosing roller/paddle soaked in seasoning
b) brushing/brush soaked in seasoning
c) spraying by nebulisation or aerosolisation
d) soaking.

Preferably, this first seasoning step may also involve salting and/or garnishing the outer surface of the raw dough portions with salt and/or flavourings and/or spices of the usual snack type. This process takes place, for example, by dropping or spraying with a percentage between 0.15% and 7% of the weight of the raw dough portion.

In the case of sweet snacks, it is also possible to include sweet condiments such as milk, eggs, honey, sugar, cane sugar, mint, cocoa powder, coffee powder, in a varying amount between 0.1% and 10% of the product weight.

It is also possible to use alcoholic condiments such as beer, wine, cognac, rum, whisky, gin, vodka, in percentages between 0.1%-10%.

The raw and seasoned dough portions are then subjected to the cooking heat treatment.

Preferably, cooking is carried out choosing one of the following ways:
a) baking in convection ovens, preferably with a 'Rotor' type oven and trays;
b) baking in aligned ovens at a temperature between 80° and 300° and a speed between 2 m/minute and 30 m/minute, preferably between 4 m/minute and 20 m/minute;
c) cooking on gas or electric heating griddles and/or surfaces of the known type for toasting or industrial cooking of piadina or flat bread.

For baking in Rotor-type convection ovens, the portions of raw dough are automatically loaded onto trays, which are then loaded on trolleys.

The cooking temperature is between 80°C and 300°C, the duration is between 1 minute and 120 minutes, but preferably between 6 minutes and 40 minutes, and even more preferably between 8 minutes and 25 minutes, at a temperature between 120°C and 190°C with a moisture content of the oven chamber of between 0.1% and 25%, but preferably with a moisture content of the chamber of between 0.1% and 10%.

For the cooking with heating griddles and/or surfaces, portions of raw dough are automatically transported to a "piadina cooker" plate, which, for example, comprises a rotating disc heated by burner units or electric heating elements. The products are thus cooked preferably on one side at a temperature of between 90° and 340°C and preferably between 120°C and 265°C.

As has already been pointed out several times according to the invention with heat, the portions of dough must not increase in volume, and surface bubbles must not be created, nor must they expand.

The product obtained by cooking has the same initial shape but slightly smaller size than the raw product, due to the reduction of moisture in the product itself. The difference in size can, for example, be between 2% and 10%.

After the cooking step, the method may include a second seasoning step, in which one more of the ingredients listed for the first seasoning step are added to the cooked portions of dough. Preferably for this second seasoning step, a usual rotary drum machine is used to dose oil and powdered or crushed flavours.

The method involves a cooling step, which can be natural or forced, in which the cooked dough portions are brought to a temperature of between 15°C and 40°C, in a time that can vary between 30 seconds and 48 hours, and which is preferably between 5 minutes and 10 hours.

Finally, the method includes a step of packaging the cooled products.

### Detailed description

The method according to the present invention is further described by referring to some embodiments, provided by way of example and not limitation.

### Example 1 RIGATONI ALLA AMATRICIANA

A dough for producing a snack of the "rigatoni alla amatriciana" type according to the invention was prepared from the following ingredients and where the quantities are expressed in kg:
- durum wheat semolina 3
- water 1.076
- oil 0.075
- salt 0.07

The ingredients were kneaded for about 20' with a horizontal double paddle kneader. The resulting dough with a water content of 25.5% was then subjected to extrusion in an extruder with a nut screw at a temperature of less than 80°C and a pressure of approximately 80 bar, using a die for rigatoni with a die and consequently a rigatoni wall thickness of approximately 0.7 mm. Rigatoni are automatically cut so as to have to a length of about 4 cm.

They pass on a wire mesh conveyor belt provided with heating lamps for pre-drying at a temperature of 75° for a period of 5 minutes.

Next, rigatoni are seasoned with olive oil and tomato dressing/sauce/puree and then placed on Rotor-type baking trays.

From here, via a Rotor-type tray-holder trolley, they enter a Rotor-type oven at 190° for 25' to be cooked.

For the amatriciana recipe, cooked rigatoni are flavoured with freeze-dried cheek lard powder in a special machine with a rotating drum. In order to make the freeze-dried cheek lard stick, the product is also sprayed with olive oil or sunflower oil.

Finally, these products, after being cooled at room temperature until they reach a temperature of 20°C, are packed in food bags and are ready for distribution and consumption.

### Example 2 PLAIN LASAGNETTE (SMALL LASAGNA) WITH RED LENTIL FLOURS

A dough for producing a snack of the "plain lasagnette with red lentil flours" type according to the invention was prepared from the following ingredients and where the quantities are expressed in kg:
- durum wheat semolina 2.2
- red lentil flour 0.6
- water 1.204
- oil 0.1
- salt 0.075

The ingredients were kneaded for about 30' with a horizontal double paddle kneader. The resulting dough with a water content of 25.5% was then subjected to extrusion so as to obtain a lasagna sheet with a thickness of approximately 1mm.

This sheet is conveyed under a calibrator that lowers the thickness of pasta to 0.85 mm. This lasagna sheet is cut into 2.5 cm wide and about 4 cm long lasagnette. These lasagnette are passed on a nylon belt and are then placed in trays and seasoned with olive oil.

These lasagnette are transported on a piadina cooking griddle for 12 minutes at a temperature of 160°C.

Lasagnette are thus toasted and cooked on one side.

In case of vegan recipe, they are ready, while for the recipe with cheese, these cooked lasagnette are seasoned with fresh grana padano cheese (e.g. dropped on the lasagnette) and olive oil.

Finally, these products are packed in special food bags and are ready for distribution and consumption.

### Example 3 PIZZOCCHERI

A dough for producing a snack of the "pizzoccheri" type (pizzoccheri is a famous and typical recipe from the Valtellina, a mountainous region of Lombardy) according to the invention was prepared with the following ingredients and where quantities are expressed in kg:
- durum wheat semolina 2.34
- buckwheat flour 0.74
- water 1.114
- oil 0.15
- salt 0.075

The ingredients were kneaded for about 30' with a horizontal double paddle kneader. The resulting dough with a water content of 25.2 per cent was then subjected to extrusion in order to obtain a sheet of pasta with a thickness of about 1mm.

This sheet of pasta is cut into the classic pizzoccheri shape (shorter tagliatelle) with a width of 0.6 cm and a length of approximately 7 cm. These pizzoccheri are passed on a conveyor belt and then seasoned with butter and sage.

Pizzoccheri are then placed on Rotor-type trays.

From here, via a Rotor tray-holder trolley, they enter a Rotor oven at 165° for 32' to be cooked.

Cooked pizzoccheri are then passed through a rotating drum where they are sprinkled with brine and sage. At this point, pizzoccheri are allowed to cool and are ready for instant consumption or packaging.

Pizzoccheri are eaten as a snack as an aperitif, but they can also be placed on a plate, suitably stuffed with fresh cheese of the "Bitto" or "Casera" type in cubes or flakes, heated so that the cheese melts and eaten like the typical "pizzoccheri alla valtellinese" dish, but in a crispy version, advantageously they can be eaten with the hands like the typical dishes of nachos with cheese and chilli.

### Example 4 LASAGNETTE AL RAGÚ WITH PARMESAN CREAM

A dough for producing a snack of the "lasagnette al ragù with parmesan cream" type according to the invention was prepared with the following ingredients and where the quantities are expressed in kg:
- durum wheat semolina 3
- powdered spinaches 0.04
- water 1.080
- oil 0.075
- wine vinegar 0.008
- salt 0.07

The ingredients were kneaded for about 25' with a horizontal double paddle kneader. The resulting dough with a water content of 25.5% was then subjected to lamination or extruded to obtain a lasagna sheet with a thickness of about 1.2mm.

This sheet is conveyed under a calibrator that lowers the thickness of pasta to 0.9 mm. This lasagna sheet is cut into lasagnette 2.5 cm wide and about 4 cm long. These lasagnette are seasoned with olive oil and passed on a conveyor belt and then they are placed in trays. From here, by means of a trolley, they are cooked in a Rotor oven at 185° for 13.5'.

Lasagnette can then be packed in heat-sealable and microwavable PET containers for direct heating in a microwave oven. Two small jars containing ragù and grated cheese, such as parmesan or grana padano cheese, respectively, are also placed in said containers. The small jars are sealed with film and contain the product in a modified atmosphere. The container is also sealed with film/cling film.

Lasagnette packed in this way can be consumed after heating in a microwave or oven. The small jars containing ragù and parmesan cheese are then poured over the lasagna snack and eaten directly with the hands.

The same method could be applied to the four-cheese pasta recipe.

### Example 5 PENNE WITH CHEESE AND PEPPER

A dough for producing a snack of the "vegetable soup with penne with cheese and pepper" type according to the invention has been prepared from the following ingredients and where the quantities are expressed in kg:
- durum wheat semolina 3
- freeze-dried pecorino cheese 0.07
- powdered pepper 0.02
- water 1.076
- oil 0.075
- salt 0.07

The ingredients are mixed and kneaded for about 25' with a horizontal double paddle mixer. In an extruder with a nut screw at a temperature of less than 80°C and a pressure of approximately 80 bar, using a die for penne with a die and consequently penne wall thickness of approximately 0.7 mm. Penne are automatically cut so as to have a length of about 4 cm. These are passed on a conveyor belt and a shaker (or under a belt with heating lamps) for pre-drying at a temperature of about 75° C for about 5 minutes.

Afterwards, penne are seasoned with olive oil and then placed on Rotor-type baking trays. From here, by means of a trolley, they are cooked in a Rotor oven at 190° for 15'.

Cooked penne are then flavoured with pecorino cheese and pepper powder, which are sprinkled on the outer surface of the cylinder of the cooked penne using a rotating drum machine.

Finally, these products after being cooled at room temperature are packed in special food bags and are ready for distribution and consumption.

This product can also be eaten as a crouton dipped in a warm tomato soup or vegetable soup instead of croutons or classic pasta. It should be noted that the dough, not being leavened or puffed, remains crispy even after being dipped in the soup.

### Example 6 RAVIOLI WITH CHEESE AND PEPPER

A dough for producing a snack of the "ravioli with cheese and pepper" type according to the invention was prepared from the following ingredients and where the quantities are expressed in kg:
for the ravioli dough:
- durum wheat semolina 1.4
- double zero flour 1.4
- water 1.125
- oil 0.1
- salt 0.075

The ingredients for the ravioli filling are: grated Roman pecorino cheese, pepper, cream, potato starch in the standard amount for the person skilled in the art for preparing ravioli with cheese and pepper.

The dough ingredients are mixed and kneaded for about 30' in a horizontal bowl with a horizontal paddle.

The ingredients for the filling are prepared and cooked according to the standard for the person skilled in the art.

The resulting dough with a water content of 26.2% was then fed to an automatic modular ravioli machine for the processing of double sheet stuffed pasta with the filling inside, which comprises:
- two separate and independent laminating units, each consisting of a pair of rollers with an adjustable thickness, each adapted to form a 1mm-thick sheet;
- an automatic dispenser with a filling injection unit adapted to inject the filling between the two laminated sheets of dough,
- and a unit for moulding and cutting the ravioli to the desired shape.

Ravioli are 5 cm x 4 cm wide with the classic wavy edge of ravioli.

Ravioli are then seasoned on the surface with egg white by automatic brushing, and are then deposited on a baking tray.

From here, via a tray-holder trolley, they enter a Rotor oven to be cooked at 145° for 45 minutes.

Once cooled at room temperature, ravioli are packed in food bags.

## Claims

1. A method for making a snack food, in particular of the crunchy type, especially a savoury snack food, preferably to be eaten as a snack, having the form of the usual shapes of fresh or dry, short or long pasta, comprising the steps of:
a) preparing a dough comprising:
- durum wheat semolina in an amount between 40% and 80% by weight of the dough, preferably between 60% and 75%,
- water in an amount between 10% and 40% by weight of the dough, preferably between 20% and 30%,
- vegetable oils and / or animal fats, preferably extra virgin olive oil, or olive oil, or butter, or peanuts oil, or coconut oil, or palm oil, or lard, in an amount between 0.1% and 15% by weight,
more preferably between 0.1% and 10%,
- salt in an amount between 0.1% and 10% by weight of the dough, preferably between 0.5% and 7%,
- wherein said dough is yeast-free, i.e. it does not contain substances that, when added to the dough, increase the volume of said dough.
b) a first processing of the dough by means of an extrusion or lamination process so as to obtain portions of raw dough which have the forms of the classic shapes of fresh or dry short or long pasta, or the shape of strips, sticks, or a polygonal shape;
c) wherein, after said first processing, said portions of raw dough have a thickness between 0.1 mm and 2 mm, preferably between 0.4 mm and 1.3 mm;
d) wherein in said first dough processing, the dough is kept at a temperature and for a time lower than the cooking temperature and time, preferably lower than 80°C, so that at the end of this first processing the obtained dough portions are still raw;
e) subjecting the dough portions to a second process which includes a first step of dressing the raw extruded or laminated dough portions, wherein vegetable oil, preferably olive oil or extra virgin olive oil, and/or sauces, and/or dressings are added to all or part of the outer surface of said portions of raw dough, in a percentage between 1% and 30% by weight of the portion of the raw dough,
f) subjecting the dough portions to a third process which includes a thermal cooking treatment chosen from one of the following treatments: baking in the oven or cooking on heated plates,
- wherein said dough portions are cooked at a temperature between 80°C and 340°C, preferably between 120°C and 190°C, and for a duration between 1 minute and 120 minutes, preferably between 6 minutes and 40 minutes, and even more preferably between 8 minutes and 25 minutes,
- wherein cooking said portions of raw dough does not require ventilation or requires ventilation of less than 15m/s so as to prevent their expansion, and/or creation of bubbles on the surface,
- wherein said cooking does not involve frying the dough portions,
g) wherein after cooking the snack:
- has a moisture content below 8%, preferably below 6%,
- has substantially maintained the same shape as the dough portions before cooking, has not expanded, is neither puffed nor leavened, nor shows surface swellings,
- has smaller dimensions with respect to the size of the portions of dough before cooking, for example smaller percentage dimensions by a value between 2% and 30%.

2. The method according to claim 1 **characterized in that** the dough comprises one or more of the following ingredients:
- an ingredient selected from the group comprising: double zero flour, and/or zero flour, and/or whole wheat flour, and/or kamut flour, and/or buckwheat flour, and/or corn flour, and/or rice, and/or oat flour, and/or chickpea flour, and/or legume flour, and/or vegetable flour and/or pulverized vegetables, for example spinach, tomato, beetroot, carrot, and/or red lentils, and/or pea flour, and/or potato starch, and/or coconut flour, and/or a mixture of said flours or pulverized vegetables or starch, and/or a mixture of said ingredients, wherein said ingredient and/or mixture is included in the dough in a percentage between 0% and 50%, preferably between 0% and 30% by weight of the dough;
- and/or an ingredient selected from the group comprising: cheeses, grated cheeses, dried or dehydrated powdered cheeses, for example parmigiano reggiano, grana padano, pecorino, pecorino romano, gorgonzola, and/or a mixture of said ingredients, wherein said ingredient and/or mixture is included in the dough in a percentage between 0% and 7% by weight of the dough;
- and/or an ingredient selected from the group comprising: crushed spices, and/or dried or freeze-dried powdered flavourings, for example: chilli pepper, basil, garlic, vegetables, tomatoes, dehydrated olives, capers, powdered pancetta or bacon, cocoa, coffee, and/or a mixture of said ingredients, wherein said ingredient and/or mixture is included in the dough in a percentage between 0% and 7% by weight of the dough;
- and/or an ingredient selected from the group comprising: wine, and/or wine or apple vinegar, and/or a mixture of said ingredients, wherein said ingredient and/or mixture is included in the dough in a percentage between 0% and 5% by weight of the dough;
- and/or an ingredient selected from the group comprising: seeds, for example sesame seeds, pumpkin seeds, cereal seeds, and/or a mixture of said ingredients, wherein said ingredient and/or mixture is included in the dough in a percentage between 0% and 5% by weight of the dough;
- and/or an ingredient selected from the group comprising: eggs, and/or honey, and/or sugar, and/or cane sugar, and/or mint, and/or cocoa powder, and/or coffee powder, and /or a mixture of said ingredients, wherein said ingredient and/or mixture is included in the dough in a percentage between 0% and 10% by weight of the dough;
- and/or an ingredient selected from the group comprising: alcoholic liquids for example beer, wine, cognac, rum, whisky, gin, vodka, and/or a mixture of said ingredients, wherein said ingredient and/or mixture is included in the dough in a percentage between 0% and 10% by weight of the dough.

3. The method according to one or more of the preceding claims, **characterized in that** the ingredients of the dough are poured into a bowl of a kneading machine and the ingredients are mixed for a time between 6 minutes and 120 minutes, preferably between 8 minutes and 60 minutes, so as to obtain a dough with a consistency that is not compact but fragmented, crumbling since it is a dry and not elastic dough, which is compacted only in the subsequent steps involving the extrusion and/or lamination of the dough.

4. The method according to one or more of the preceding claims, **characterized in that** to facilitate extrusion and/or lamination, the dough is a slightly damp and slightly hard dough and requires a moisture content below 35%, and preferably between 20% and 30%.

5. The method according to one or more of the preceding claims, **characterized in that** the dough processing step by means of an extrusion process involves introducing the dough into an extruder adapted to push the dough through a die so as to obtain at the outlet of said extruder raw and very compact dough portions which have the forms of the classic shapes of the short or long pasta, said extruder subjecting the dough to a pressure of at least 10 bar, preferably between 20 bar and 180 bar, and even more preferably between 40 bar and 120 bar, so as to reduce the content of air present in the extruded dough portions, wherein preferably the temperature of the extruded dough portions leaving the extruder is between 20°C and 80°C so as to avoid cooking said portions of dough during this phase of the process.

6. The method according to claim 5, **characterized in that** during the extrusion process the dough is cooled so as to keep the temperature of the dough below a temperature which could cause it to be partially cooked, for example below 80°C.

7. The method according to one or more of the preceding claims, **characterized in that** between the first step of processing the dough adapted to obtain raw portions of dough and the second step of thermal cooking treatment, it is provided that the portions of raw pasta are subjected to a stabilization of their shape which includes a preliminary heat treatment at a temperature below 120°C and over 50°C, so that said dough portions have a moisture content between 12% and 23%, but are not yet subjected to a cooking process, wherein said preliminary heat treatment is preferably carried out by one of the following steps:
a) passing in a steam chamber,
b) passing through a pasteuriser, for example of the type having a heating system with integrated boiler and heat exchanger immersed in water, for example for a time between 0.10 seconds and 15 minutes and with a maximum temperature of 120°C, wherein the process must not include cooking of the product, hence for temperatures above 70°C the pasteurization times are very limited, for example just a few seconds for a temperature between 80°C and 120°C,
c) passing in aligned ovens with electric resistances or lamps heating, for example, at a temperature between 25° and 200° and for example for a period between 0.10 seconds and 50 minutes, wherein the process must not involve cooking the product, hence for temperatures over 70°C the period of times in the ovens are very limited, for example a few seconds for a temperature between 80°C and 200°C.

8. The method according to one or more of the preceding claims, **characterized in that** a step of seasoning and / or flavouring the raw extruded or laminated dough portions is included, which provides adding to all or part of the outer surface of said raw dough portions and / or said cooked dough portions at least one ingredient selected from:
- usual dressings or sauces, for example tomato sauce, basil pesto, olive pesto, cheese sauces,
- egg white in an amount between 0.1% and 10% by weight of the raw dough portion,
- and / or usual cheese sauces, and / or flavourings, in an amount between 0.1% and 10% by weight of the raw dough portion, wherein the flavours comprise the usual flavours of pasta dishes, for example: cheese and pepper, parmesan, pesto, amatriciana sauce, tomato sauce, carbonara, garlic, oil and chilli pepper, norma, saffron, ragù; arrabiata, puttanesca, cream and ham, butter and sage and parmesan;
- and / or animal fats, for example butter or lard, in an amount between 0.1% and 25% by weight of the raw dough portion,
- and / or salt and / or flavourings and / or spices, in an amount between 0.15% and 7% by weight of the raw dough portion,
- and / or sweet condiments such as: milk, eggs, honey, sugar, cane sugar, mint, cocoa powder, coffee powder, in an amount between 0.1% and 10% of the product weight;
- and / or alcoholic condiments such as: beer, wine, cognac, rum, whisky, gin, vodka, in an amount between 0.1% and 10%, wherein said seasoning step is provided before and / or after cooking said dough portions.

9. The method according to one or more of the preceding claims, **characterized in that** one of the following methods is chosen for baking in the oven:
- baking in convection ovens, preferably with a "Rotor" type oven and trays;
- baking in aligned ovens at a temperature between 80° and 300° and a speed between 2 m/minute and 30 m/minute, preferably between 4 m/minute and 20 m/minute;
- cooking on gas or electric heating griddles and / or surfaces of the known type for toasting or industrial cooking of piadina or flat bread, wherein preferably for cooking in ovens the chamber moisture is comprised between 0.1% and 25% and more preferably with a chamber moisture between 0.1 and 10%; wherein preferably for cooking on griddles and / or heating surfaces the dough portions are cooked on one side at a temperature between 90° and 340°C and preferably between 120°C and 265°C.

10. A snack having the form of the usual shapes of short or long pasta, obtainable by the method according to one or more of the preceding claims, having a smooth or rough outer surface which is neither expanded nor fried, so as to have an outer surface appearance substantially identical to that of the usual shapes of short or long pasta.

## Patentansprüche

1. Verfahren zur Herstellung eines Snack-Lebensmittels, insbesondere vom knusprigen Typ, vor allem eines herzhaften Snack-Lebensmittels, das vorzugsweise als Snack zu verzehren ist, in Form von klassischen frischen oder trockenen, kurzen oder langen Teigwarenformen, umfassend die folgenden Schritte:
a) Vorbereiten eines Teigs, umfassend:
- Hartweizengrieß in einer Menge zwischen 40 und 80 Gew.-% des Teigs, vorzugsweise zwischen 60 % und 75 %;
- Wasser in einer Menge zwischen 10 und 40 Gew.-% des Teigs, vorzugsweise zwischen 20 % und 30 %;
- pflanzliche Öle und/oder tierische Fette, vorzugsweise natives Olivenöl extra oder Olivenöl oder Butter oder Erdnussöl oder Kokosöl oder Palmöl oder Schmalz in einer Menge zwischen 0,1 und 15 Gew.-%,
vorzugsweise zwischen 0,1 % und 10 %;
- Salz in einer Menge zwischen 0,1 und 10 Gew.-% des Teigs, vorzugsweise zwischen 0,5 % und 7 %,
- wobei der Teig hefefrei ist, d. h. keine Stoffe enthält, die, wenn sie dem Teig hinzugefügt werden, das Volumen des Teigs erhöhen;
b) ein erstes Verarbeiten des Teigs mittels eines Extrusions- oder Auswalzprozesses, sodass Rohteigportionen gewonnen werden, die die Formen der klassischen Formen von frischen oder trockenen, kurzen oder langen Teigwaren aufweisen oder als Streifen, Stäbe oder vieleckig ausgestaltet sind;
c) wobei diese Rohteigportionen nach dem ersten Verarbeiten eine Dicke zwischen 0,1 mm und 2 mm, vorzugsweise zwischen 0,4 mm und 1,3 mm, aufweisen;
d) wobei der Teig nach diesem ersten Verarbeiten des Teigs bei einer Temperatur und für einen Zeitraum gelagert wird, die geringer sind als die Temperatur und der Zeitraum für das Garen, vorzugsweise geringer als 80 °C, sodass die nach dem Abschluss des ersten Verarbeitens gewonnenen Teigportionen noch roh sind;
d) Unterziehen der Teigportionen einem zweiten Prozess, der einen ersten Schritt des Benetzens der rohen extrudierten oder ausgewalzten Teigportionen einschließt, wobei pflanzliches Öl, vorzugsweise Olivenöl oder natives Olivenöl extra und/oder Saucen und/oder Dressings der gesamten oder einem Teil der äußeren Oberfläche der Rohteigportionen in einem Anteil zwischen 1 und 30 Gew.-% der Rohteigportion hinzugefügt werden;
f) Unterziehen der Teigportionen einem dritten Prozess, der eine thermische Garbehandlung einschließt, die aus den folgenden Behandlungen ausgewählt ist: Backen im Ofen oder Garen auf erhitzten Platten,
- wobei die Teigportionen bei einer Temperatur zwischen 80 °C und 340 °C, vorzugsweise zwischen 120 °C and 190 °C, und für einen Zeitraum zwischen 1 Minute und 120 Minuten, vorzugsweise zwischen 6 Minuten und 40 Minuten, insbesondere vorzugsweise zwischen 8 Minuten und 25 Minuten, gegart werden,
- wobei das Garen der Rohteigportionen keine Belüftung oder eine Belüftung von weniger als 15 m/s erfordert, sodass deren Ausdehnen und/oder die Entstehung von Blasen auf der Oberfläche verhindert werden,
- wobei das Garen das Frittieren der Teigportionen nicht beinhaltet,
g) wobei der Snack nach dem Garen
- einen Feuchtegehalt unter 8 %, vorzugsweise unter 6 %, aufweist;
- im Wesentlichen die gleiche Form wie die Teigportionen vor dem Garen beibehalten hat, sich weder ausgedehnt hat, noch aufgegangen oder gelockert ist und keine Oberflächenaufwölbungen zeigt;
- gegenüber der Größe der Teigportionen vor dem Garen geringere Abmessungen aufweist, beispielsweise um einen Prozentwert zwischen 2 % und 30 % geringere Abmessungen.

2. Verfahren nach Anspruch 1, **dadurch gekennzeichnet, dass** der Teig eine oder mehrere der folgenden Zutaten umfasst:
- eine Zutat, ausgewählt aus der Gruppe, umfassend: Weizenmehl des Typs 00 und/oder Weizenmehl des Typs 0 und/oder Vollkornweizenmehl und/oder Kamutmehl und/oder Buchweizenmehl und/oder Maismehl und/oder Reismehl und/oder Hafermehl und/oder Kichererbsenmehl und/oder Hülsenfrüchtemehl und/oder Gemüsemehl und/oder pulverisiertes Gemüse, beispielsweise Spinat, Tomaten, Rote Bete, Karotten und/oder roten Linsen, und/oder Erbsenmehl und/oder Kartoffelstärke und/oder Kokosmehl und/oder eine Mischung der genannten Mehle oder des pulverisierten Gemüses oder der Stärke und/oder eine Mischung dieser Zutaten, wobei die Zutat und/oder Mischung in einem Anteil zwischen 0 und 50Gew.-%, vorzugsweise zwischen 0 und 30 Gew.-%, des Teigs in dem Teig enthalten ist,
- und/oder eine Zutat, ausgewählt aus der Gruppe, umfassend: Käse, geriebenen Käse, getrocknetes oder dehydratisiertes Käsepulver, beispielsweise Parmigiano Reggiano, Grana Padano, Pecorino, Pecorino Romano, Gorgonzola, und/oder eine Mischung dieser Zutaten, wobei die Zutat und/oder Mischung in einem Anteil zwischen 0 und 7Gew.-% des Teigs in dem Teig enthalten ist;
- und/oder eine Zutat, ausgewählt aus der Gruppe, umfassend: zerkleinerte Gewürze und/oder getrocknete oder gefriergetrocknete pulverförmige Aromastoffe, beispielsweise Chili, Basilikum, Knoblauch, Gemüse, Tomaten, getrocknete Oliven, Kapern, Pancetta- oder Bacon-Pulver, Kakao, Kaffee und/oder eine Mischung dieser Zutaten, wobei die Zutat und/oder Mischung in einem Anteil zwischen 0 und 7Gew.-% des Teigs in dem Teig enthalten ist;
- und/oder eine Zutat, ausgewählt aus der Gruppe, umfassend: Wein und/oder Wein- oder Apfelessig und/oder eine Mischung der genannten Zutaten, wobei die Zutat und/oder Mischung in einem Anteil zwischen 0 und 5Gew.-% des Teigs in dem Teig enthalten ist;
- und/oder eine Zutat, ausgewählt aus der Gruppe, umfassend: Samen, beispielsweise Sesamsamen, Kürbiskerne, Getreidesamen, und/oder eine Mischung dieser Zutaten, wobei die Zutat und/oder Mischung in einem Anteil zwischen 0 und 5 Gew.-% des Teigs in dem Teig enthalten ist;
- und/oder eine Zutat, ausgewählt aus der Gruppe, umfassend: Eier und/oder Honig und/oder Zucker und/oder Rohrzucker und/oder Minze und/oder Kakaopulver und/oder Kaffeepulver und/oder eine Mischung dieser Zutaten, wobei die Zutat und/oder Mischung in einem Anteil zwischen 0 und 10Gew.-% des Teigs in dem Teig enthalten ist;
- und/oder eine Zutat, ausgewählt aus der Gruppe, umfassend: alkoholische Flüssigkeiten, beispielsweise Bier, Wein, Cognac, Rum, Whisky, Gin, Wodka, und/oder eine Mischung dieser Zutaten, wobei die Zutat und/oder Mischung in einem Anteil zwischen 0 und 10Gew.-% des Teigs in dem Teig enthalten ist.

3. Verfahren nach einem oder mehreren der vorhergehenden Ansprüche, **dadurch gekennzeichnet, dass** die Zutaten des Teigs in eine Schüssel einer Knetmaschine gefüllt werden und die Zutaten für einen Zeitraum zwischen 6 Minuten und 120 Minuten, vorzugsweise zwischen 8 Minuten und 60 Minuten, vermischt werden, um einen Teig mit einer nicht kompakten, sondern nicht zusammenhängenden, bröseligen Konsistenz zu erhalten, da es sich um einen trockenen und nicht elastischen Teig handelt, der erst in den nachfolgenden Schritten, die die Extrusion und/oder das Auswalzen des Teigs beinhalten, verdichtet wird.

4. Verfahren nach einem oder mehreren der vorhergehenden Ansprüche, **dadurch gekennzeichnet, dass** der Teig, um die Extrusion und/oder das Auswalzen zu erleichtern, ein leicht feuchter und leicht fester Teig ist und einen Feuchtegehalt von unter 35%, vorzugsweise zwischen 20% und 30%, erfordert.

5. Verfahren nach einem oder mehreren der vorhergehenden Ansprüche, **dadurch gekennzeichnet, dass** der Teigverarbeitungsschritt mittels eines Extrusionsprozesses das Einführen des Teils in einen Extruder beinhaltet, der dazu geeignet ist, den Teig durch eine Matrize zu pressen, sodass am Ausgang des Extruders rohe und sehr kompakte Teigportionen gewonnen werden, die die Formen der klassischen kurzen oder langen Teigwarenformen aufweisen, wobei der Extruder den Teig einem Druck von mindestens 10 bar, vorzugsweise zwischen 20 bar und 180 bar, insbesondere vorzugsweise zwischen 40 bar und 120 bar, unterzieht, sodass die in den extrudierten Teigportionen enthaltene Luftmenge reduziert wird, wobei die Temperatur der den Extruder verlassenden extrudierten Teigportionen vorzugsweise zwischen 20 °C und 80 °C liegt, sodass das Garen der Teigportionen während dieser Phase des Prozesses vermieden wird.

6. Verfahren nach Anspruch 5, **dadurch gekennzeichnet, dass** der Teig während des Extrusionsprozesses gekühlt wird, sodass die Temperatur des Teigs unter einer Temperatur beibehalten wird, die dessen teilweises Garen herbeiführen würde, beispielsweise unter 80 °C.

7. Verfahren nach einem oder mehreren der vorhergehenden Ansprüche, **dadurch gekennzeichnet, dass** zwischen dem ersten Schritt des Verarbeiten des Teigs, der dazu geeignet ist, rohe Teigportionen zu gewinnen, und dem zweiten Schritt der thermischen Garbehandlung, vorgesehen ist, dass die Rohteigwarenportionen einer Stabilisierung ihrer Form unterzogen werden, die eine einleitende Wärmebehandlung bei einer Temperatur unter 120 °C und über 50 °C einschließen, sodass die Teigportionen einen Feuchtegehalt zwischen 12 % und 23 % aufweisen, jedoch noch nicht einem Garprozess unterzogen werden, wobei die einleitende Wärmebehandlung vorzugsweise durch einen der folgenden Schritte durchgeführt wird:
a) Durchführen durch eine Dampfkammer;
b) Durchführen durch eine Pasteurisierungsanlage, beispielsweise vom Typ aufweisend ein Heizsystem mit integriertem Boiler und einem in Wasser eingetauchten Wärmetauscher, beispielsweise für einen Zeitraum zwischen 0,10 Sekunden und 15 Minuten und mit einer Höchsttemperatur von 120 °C, wobei der Prozess das Garen des Produkts nicht einschließen darf, weswegen die Pasteurisierungszeiten bei Temperaturen über 70 °C sehr eingeschränkt sind, beispielsweise nur einige Sekunden bei einer Temperatur zwischen 80 °C und 120 °C;
b) Durchführen durch hintereinandergeschaltete Öfen mit elektrischen Widerständen oder Lampen, die beispielsweise bei Temperaturen zwischen 25° and 200° heizen, und beispielsweise für einen Zeitraum zwischen 0,10 Sekunden und 50 Minuten, wobei der Prozess das Garen des Produkts nicht einschließen darf, weswegen die Zeiträume in den Öfen bei Temperaturen über 70 °C sehr eingeschränkt sind, beispielsweise nur einige Sekunden bei einer Temperatur zwischen 80 °C und 200 °C.

8. Verfahren nach einem oder mehreren der vorhergehenden Ansprüche, **dadurch gekennzeichnet, dass** ein Schritt des Würzens und/oder Aromatisierens der rohen extrudierten oder ausgewalzten Teigportionen eingeschlossen ist, der das Hinzufügen von mindestens einer Zutat zu der gesamten oder einem Teil der äußeren Oberfläche der rohen Teigportionen und/oder der gegarten Teigportionen bereitstellt, die ausgewählt ist aus:
- gewöhnlichen Dressings oder Saucen, beispielsweise Tomatensauce, Basilikumpesto, Olivenpesto, Käsesaucen;
- Eiern in einer Menge zwischen 0,1 und 10 Gew.-% der Rohteigportion;
- und/oder gewöhnlichen Käsesaucen und/oder Aromatisierungen in einer Menge zwischen 0,1 und 10 Gew.-% der Rohteigportion, wobei die Aromastoffe die gewöhnlichen Aromastoffe für Teigwarengerichte umfassen, beispielsweise: Käse und Pfeffer, Parmesan, Pesto, Amatriciana-Sauce, Tomatensauce, Carbonara, Knoblauch, Öl und Chili, Norma-Sauce, Safran, Ragout, Arrabbiata-Sauce, Puttanesca-Sauce, Sahne und Schinken, Butter und Salbei sowie Parmesan;
- und/oder tierische Fette, beispielsweise Butter oder Schmalz, in einer Menge zwischen 0,1 und 25 Gew.-% der Rohteigportion;
- und/oder Salz und/oder Aromastoffe und/oder Gewürze in einer Menge zwischen 0,15 und 7 Gew.-% der Rohteigportion;
- und/oder süße Zutaten wie beispielsweise Milch, Eier, Honig, Zucker, Rohrzucker, Minze, Kakaopulver, Kaffeepulver in einer Menge zwischen 0,1% und 10% des Produktgewichts;
- und/oder alkoholische Zutaten wie beispielsweise Bier, Wein, Cognac, Rum, Whisky, Gin, Wodka in einer Menge zwischen 0,1% und 10%, wobei der genannte Würzschritt vor und/oder nach dem Garen der Teigportionen vorgesehen ist.

9. Verfahren nach einem oder mehreren der vorhergehenden Ansprüche, **dadurch gekennzeichnet, dass** eines der folgenden Verfahren zum Backen in dem Ofen ausgewählt ist:
- Backen in Umluftöfen, vorzugsweise mit einem Ofen vom "Rotortyp" und Blechen;
- Backen in hintereinandergeschalteten Öfen bei einer Temperatur zwischen 80 °C und 300°C und einer Geschwindigkeit zwischen 2m/Minute und 30m/Minute, vorzugsweise zwischen 4m/Minute und 20m/Minute;
- Garen auf gas- oder elektrisch beheizten Garplatten und/oder Oberflächen des Stands der Technik zum Rösten oder industriellen Garen von Piadina oder Fladenbrot, wobei die Kammerfeuchte beim Garen in Öfen vorzugsweise zwischen 0,1% und 25% und insbesondere vorzugsweise zwischen 0,1% und 10 % liegt, wobei die Teigportionen beim Garen auf beheizten Garplatten und/oder Oberflächen vorzugsweise einseitig bei einer Temperatur zwischen 90°C und 340 °C und vorzugsweise zwischen 120 °C und 265 °C gegart werden.

10. Snack in Form von klassischen kurzen oder langen Teigwarenformen, der durch das Verfahren nach einem oder mehreren der vorhergehenden Ansprüche gewonnen werden können, aufweisend eine glatte oder raue äußere Oberfläche, die weder ausgedehnt noch frittiert ist, sodass eine Erscheinung der äußeren Oberfläche vorliegt, die im Wesentlichen mit der der klassischen kurzen oder langen Teigwarenformen identisch ist.

## Revendications

1. Procédé de fabrication d'un snack, en particulier du type croustillant, en particulier un snack salé, préférablement destiné à être consommé comme un snack, ayant la forme classique d'une pâte alimentaire fraîche ou sèche, courte ou longue, comprenant les étapes de :
a) préparer une pâte comprenant :
- de la semoule de blé dur en une quantité comprise entre 40 % et 80 % en poids de la pâte, préférablement entre 60 % et 75 %,
- de l'eau en une quantité comprise entre 10 % et 40 % en poids de la pâte, préférablement entre 20 % et 30 %,
- des huiles végétales et/ou des graisses animales, préférablement de l'huile d'olive vierge extra, ou de l'huile d'olive, ou du beurre, ou de l'huile d'arachide, ou de l'huile de coco, ou de l'huile de palme, ou du saindoux, en une quantité comprise entre 0,1 % et 15 % en poids,
plus préférablement entre 0,1% et 10%,
- du sel en une quantité comprise entre 0,1 % et 10 % en poids de la pâte, préférablement entre 0,5 % et 7 %,
- dans lequel ladite pâte est exempte de levure, c'est-à-dire qu'elle ne contient pas de substances qui, lorsqu'elles sont ajoutées à la pâte, augmentent le volume de ladite pâte ;
b) un premier traitement de la pâte au moyen d'un processus d'extrusion ou de laminage de manière à obtenir des portions de pâte crue qui ont la forme classique d'une pâte alimentaire fraîche ou sèche, courte ou longue, ou la forme de bandes, de bâtonnets ou une forme polygonale ;
c) dans lequel, après ledit premier traitement, lesdites portions de pâte crue ont une épaisseur comprise entre 0,1 mm et 2 mm, préférablement entre 0,4 mm et 1,3 mm ;
d) dans lequel dans ledit premier traitement de la pâte, la pâte est maintenue à une température et pendant un temps inférieurs à la température et au temps de cuisson, préférablement inférieurs à 80°C, de sorte qu'à la fin de ce premier traitement, les portions de pâte obtenues sont encore crues ;
e) soumettre les portions de pâte à un deuxième processus qui inclut une première étape consistant à napper les portions de pâte crue extrudées ou laminées, dans laquelle de l'huile végétale, préférablement de l'huile d'olive ou de l'huile d'olive vierge extra, et/ou des sauces, et/ou des nappages sont ajoutés à tout ou à une partie de la surface extérieure desdites portions de pâte crue, en un pourcentage compris entre 1 % et 30 % en poids de la portion de pâte crue ;
f) soumettre les portions de pâte à un troisième processus qui inclut un traitement de cuisson thermique choisi parmi l'un des traitements suivants : cuisson au four ou cuisson sur des plaques chauffées,
- dans lequel lesdites portions de pâte sont cuites à une température comprise entre 80°C et 340°C, préférablement entre 120°C et 190°C, et pendant une durée comprise entre 1 minute et 120 minutes, préférablement entre 6 minutes et 40 minutes, et encore plus préférablement entre 8 minutes et 25 minutes,
- dans lequel la cuisson desdites portions de pâte crue ne nécessite pas de ventilation ou nécessite une ventilation inférieure à 15 m/s afin d'empêcher leur dilatation, et/ou la création de bulles sur la surface,
- dans lequel ladite cuisson n'implique pas la friture des portions de pâte,
g) dans lequel, après la cuisson, le snack :
- a une teneur en humidité inférieure à 8 %, préférablement inférieure à 6 %,
- a substantiellement conservé la même forme que les portions de pâte avant la cuisson, ne s'est pas dilaté, n'a ni gonflé ni levé, et ne présente pas de boursouflures de surface,
- a des dimensions plus petites par rapport à la taille des portions de pâte avant la cuisson, par exemple des dimensions en pourcentage plus petites d'une valeur comprise entre 2 % et 30 %.

2. Procédé selon la revendication 1, **caractérisé en ce que** la pâte comprend un ou plusieurs des ingrédients suivants :
- un ingrédient choisi dans le groupe comprenant : de la farine de type 00, et/ou de la farine de type 0, et/ou de la farine de blé complet, et/ou de la farine de kamut, et/ou de la farine de sarrasin, et/ou de la farine de maïs, et/ou de la farine de riz, et/ou de la farine d'avoine, et/ou de la farine de pois chiche, et/ou de la farine de légumineuses, et/ou de la farine végétale et/ou des légumes pulvérisés, par exemple épinard, tomate, betterave, carotte, et/ou des lentilles rouges, et/ou de la farine de pois, et/ou de l'amidon de pomme de terre, et/ou de la farine de noix de coco, et/ou un mélange desdites farines ou légumes pulvérisés ou amidon, et/ou un mélange desdits ingrédients, dans lequel ledit ingrédient et/ou mélange est inclus dans la pâte en un pourcentage compris entre 0 % et 50 %, préférablement entre 0 % et 30 % en poids de la pâte ;
- et/ou un ingrédient choisi dans le groupe comprenant : des fromages, des fromages râpés, des fromages en poudre séchés ou déshydratés, par exemple parmigiano reggiano, grana padano, pecorino, pecorino romano, gorgonzola, et/ou un mélange desdits ingrédients, dans lequel ledit ingrédient et/ou mélange est inclus dans la pâte en un pourcentage compris entre 0 % et 7 % en poids de la pâte ;
- et/ou un ingrédient choisi dans le groupe comprenant : des épices broyées, et/ou des arômes en poudre séchés ou lyophilisés, par exemple : piment, basilic, ail, légumes, tomates, olives déshydratées, câpres, bacon ou pancetta en poudre, cacao, café et/ou un mélange desdits ingrédients, dans lequel ledit ingrédient et/ou mélange est inclus dans la pâte en un pourcentage compris entre 0 % et 7 % en poids de la pâte ;
- et/ou un ingrédient choisi dans le groupe comprenant : du vin, et/ou du vinaigre de vin ou de pommes, et/ou un mélange desdits ingrédients, dans lequel ledit ingrédient et/ou mélange est inclus dans la pâte en un pourcentage compris entre 0 % et 5 % en poids de la pâte ;
- et/ou un ingrédient choisi dans le groupe comprenant : des graines, par exemple graines de sésame, graines de courge, graines de céréales, et/ou un mélange desdits ingrédients, dans lequel ledit ingrédient et/ou mélange est inclus dans la pâte en un pourcentage compris entre 0 % et 5 % en poids de la pâte ;
- et/ou un ingrédient choisi dans le groupe comprenant : des œufs, et/ou du miel, et/ou du sucre, et/ou du sucre de canne, et/ou de la menthe, et/ou de la poudre de cacao, et/ou de la poudre de café, et /ou un mélange desdits ingrédients, dans lequel ledit ingrédient et/ou mélange est inclus dans la pâte en un pourcentage compris entre 0 % et 10 % en poids de la pâte ;
- et/ou un ingrédient choisi dans le groupe comprenant : des liquides alcoolisés par exemple bière, vin, cognac, rhum, whisky, gin, vodka, et/ou un mélange desdits ingrédients, dans lequel ledit ingrédient et/ou mélange est inclus dans la pâte en un pourcentage compris entre 0 % et 10 % en poids de la pâte.

3. Procédé selon une ou plusieurs des revendications précédentes, **caractérisé en ce que** les ingrédients de la pâte sont versés dans la cuve d'un pétrin et les ingrédients sont mélangés pendant une durée comprise entre 6 minutes et 120 minutes, préférablement entre 8 minutes et 60 minutes, de manière à obtenir une pâte dont la consistance n'est pas compacte mais fragmentée, friable puisqu'il s'agit d'une pâte sèche et non élastique, qui n'est compactée que lors des étapes ultérieures, consistant en l'extrusion et/ou le laminage de la pâte.

4. Procédé selon une ou plusieurs des revendications précédentes, **caractérisé en ce que** pour faciliter l'extrusion et/ou le laminage, la pâte est une pâte légèrement humide et légèrement dure et nécessite une teneur en humidité inférieure à 35 %, et préférablement comprise entre 20 % et 30 %.

5. Procédé selon une ou plusieurs des revendications précédentes, **caractérisé en ce que** l'étape de traitement de la pâte au moyen d'un processus d'extrusion comprend introduire la pâte dans une extrudeuse adaptée pour pousser la pâte à travers une filière de manière à obtenir à la sortie de ladite extrudeuse de portions de pâte crues et très compactes qui ont la forme classique d'une pâte alimentaire courte ou longue, ladite extrudeuse soumettant la pâte à une pression d'au moins 10 bars, préférablement entre 20 bars et 180 bars, et encore plus préférablement entre 40 bars et 120 bars, de manière à réduire la teneur en air présente dans les portions de pâte extrudées, dans lequel préférablement la température des portions de pâte extrudées sortant de l'extrudeuse est comprise entre 20°C et 80°C afin d'éviter la cuisson desdites portions de pâte pendant cette phase du processus.

6. Procédé selon la revendication 5, **caractérisé en ce que**, pendant le processus d'extrusion, la pâte est refroidie de manière à maintenir la température de la pâte en dessous d'une température qui pourrait provoquer sa cuisson partielle, par exemple en dessous de 80°C.

7. Procédé selon une ou plusieurs des revendications précédentes, **caractérisé en ce qu'**entre la première étape consistant à traiter la pâte adaptée pour obtenir des portions crues de pâte et la seconde étape consistant à traiter par cuisson thermique, il est prévu que les portions de pâte alimentaire crue soient soumises à une stabilisation de leur forme qui inclut un traitement thermique préliminaire à une température inférieure à 120°C et supérieure à 50°C, de sorte que lesdites portions de pâte ont une teneur en humidité comprise entre 12% et 23%, mais ne sont pas encore soumises à un processus de cuisson, dans lequel ledit traitement thermique préliminaire est préférablement effectué par l'une des étapes suivantes :
a) passer dans une chambre à vapeur,
b) passer à travers un pasteurisateur, par exemple du type ayant un système de chauffage avec chaudière et échangeur de chaleur intégrés immergés dans l'eau, par exemple pendant une durée comprise entre 0,10 seconde et 15 minutes et avec une température maximale de 120°C, dans lequel le processus ne doit pas inclure cuire le produit, donc pour des températures supérieures à 70°C les temps de pasteurisation sont très limités, par exemple quelques secondes pour une température comprise entre 80°C et 120°C,
c) passer dans des fours alignés avec des résistances électriques ou des lampes chauffantes, par exemple, à une température comprise entre 25° et 200° et par exemple pendant une période comprise entre 0,10 seconde et 50 minutes, dans lequel le processus ne doit pas comprendre cuire le produit, donc pour des températures supérieures à 70°C, la période de temps dans les fours est très limitée, par exemple quelques secondes pour une température comprise entre 80°C et 200°C.

8. Procédé selon une ou plusieurs des revendications précédentes, **caractérisé en ce qu'**une étape consistant à assaisonner et/ou aromatiser des portions de pâte crue extrudée ou laminée est incluse, ce qui permet d'ajouter à tout ou à une partie de la surface extérieure desdites portions de pâte crue et/ou desdites portions de pâte cuite au moins un ingrédient choisi parmi :
- des nappages ou des sauces habituelles, par exemple sauce tomate, pesto au basilic, pesto aux olives, sauces au fromage,
- du blanc d'œuf en une quantité comprise entre 0,1 % et 10 % en poids de la portion de pâte crue,
- et/ou des sauces au fromage habituelles, et/ ou des arômes, en une quantité comprise entre 0,1 % et 10 % en poids de la portion de pâte crue, dans lequel les arômes comprennent les arômes habituels des plats de pâte alimentaire, par exemple : fromage et poivre, parmesan, pesto, sauce amatriciana, sauce tomate, carbonara, ail, huile et piment, norma, safran, ragù ; arrabbiata, puttanesca, crème fraîche et jambon, beurre et sauge et parmesan ;
- et/ou des graisses animales, par exemple beurre ou saindoux, en une quantité comprise entre 0,1 % et 25 % en poids de la portion de pâte crue ;
- et/ou du sel et/ou des arômes et/ou des épices, en une quantité comprise entre 0,15 % et 7 % en poids de la portion de pâte crue ;
- et/ou des condiments sucrés tels que : lait, œufs, miel, sucre, sucre de canne, menthe, cacao en poudre, café en poudre, en quantité comprise entre 0,1% et 10% du poids du produit ;
- et/ou des condiments alcoolisés tels que : la bière, vin, cognac, rhum, whisky, gin, vodka, en quantité comprise entre 0,1% et 10%, dans lequel ladite étape consistant à assaisonner est prévue avant et/ou après la cuisson desdites portions de pâte.

9. Procédé selon une ou plusieurs des revendications précédentes, **caractérisé en ce que** l'un des procédés suivants est choisi pour cuire au four :
- cuire dans des fours à convection, préférablement avec un four et des plateaux de type « Rotor » ;
- cuire dans des fours alignés à une température comprise entre 80° et 300° et une vitesse comprise entre 2 m/minute et 30 m/minute, préférablement entre 4 m/minute et 20 m/minute ;
- cuire sur des grils et/ou des surfaces chauffants au gaz ou électriques du type connu pour griller ou cuire industriellement une piadina ou du pain plat, dans lequel, préférablement, pour cuire dans des fours, l'humidité de la chambre est comprise entre 0,1 % et 25 % et, plus préférablement, avec une humidité de la chambre comprise entre 0,1 et 10 % ; dans lequel, préférablement, pour la cuisson sur des grils et/ ou des surfaces chauffants, les portions de pâte sont cuites d'un côté à une température comprise entre 90° et 340°C et, préférablement, entre 120°C et 265°C.

10. Snack ayant la forme classique d'une pâte alimentaire courte ou longue, pouvant être obtenu par le procédé selon une ou plusieurs des revendications précédentes, ayant une surface extérieure lisse ou rugueuse qui n'est ni dilatée ni frite, de manière à avoir un aspect de surface extérieure substantiellement identique à celui de la forme classique d'une pâte alimentaire courte ou longue.
